# EUROPEAN PATENT SPECIFICATION

(11) **EP 1 082 574 B1**
(45) Date of publication and mention of the grant of the patent: **14.08.2002**
(21) Application number: 99925139.0
(22) Date of filing: 02.06.1999
(51) Int. Cl.: F23D 14/84, F23D 21/00, F23D 14/30, A01K 11/00, A22B 5/00

(54) **Food processing apparatus**
Speisenherstellungsgerät
Appareil pour la préparation de nourriture

(30) Priority: 02.06.1998 GB 9811707
(43) Date of publication of application: 14.03.2001
(73) Proprietor: G.W. Padley Holdings Limited, Sleaford, Lincolnshire NG34 9SL (GB)
(72) Inventor: WALTON, David, Darley Abbey, Derby DE22 1EF (GB); HODSON, Paul Leslie, Branstone, Lincoln LN4 1NS (GB)
(74) Representative: Powell, Timothy John
(86) International application number: GB9901516
(87) International publication number: WO9963269

(56) References cited:
- EP-A- 0 506 043
- FR-A- 2 559 093
- US-A- 4 433 621

## Description

This invention relates to a food processing apparatus, and to a method of its use.

It is known in the food industry to brand food products, especially cuts of meat, with burn lines simulating the effect of cooking the food product on a griddle or griddle pan. This branding is achieved through use of a contact process, in which heated, elongate elements, mounted on a roller, contact the food product to char its surface. The known technique is typically used on cuts of beef in order to create an aesthetically appealing product. Such a food processing apparatus is known e.g. from US 4 433 621 A.

The known branding technique suffers numerous disadvantages. One is that processing times are long. Moving food products must be slowed on their conveyors to a linear speed matching that of the rotation of the roller, so that the heated elements contact the surface of the meat for a long enough period to cause the desired charring, without causing excessive smudging of the brand lines. Alternatively it is known to use very large diameter, heated rollers whose peripheral, tangential speed is similar to that of the food processing/conveying machinery to which it is connected. However such large diameter rollers suffer other disadvantages as detailed below.

The energy consumption of the known apparatuses for branding is high, since it is necessary to heat the elements at all times, even when they are not in contact with the food products. There is much wastage of heat as a result. Since temperature control in food factories is essential for hygiene reasons, food manufacturers must spend significant amounts in operating cooling plant in the vicinity of the branding machines. These problems are particularly acute when the large diameter rollers are used, since they require more energy to heat them and hence dissipate more heat into the surrounding space.

Since the branding elements contact the food products the elements must be regularly cleaned. The need for cleaning reduces the throughput of the branding apparatuses and shortens their working lives. Unless the rollers are thoroughly cleaned at regular intervals, food debris and charred matter can be transferred to food products entering the branding machine.

Yet a further disadvantage of known branding techniques is that they are poor at branding some types of food product such as pieces of poultry meat. This is primarily because the meat pieces often are not flat, with the result that uneven branding can occur. Sometimes the branding element ruptures and penetrates the meat surface with undesirable results. Also any marinades and/or sauces on the meat surface can stick to the branding elements, leading to uneven coatings on the meat products.

According to a first aspect of the invention, there is provided a food processing apparatus comprising a gas burner that includes a series of first orifices for emitting a combustible gas flanked by one or more of second orifices for emitting a combustion vitiating gas, whereby, on burning of a combustible gas emitted via the first orifices , the emission of a combustion vitiating gas via the second orifices modifies the shape of the flame created by the first orifices.

The gas burner can be adjusted to generate an elongate, substantially parallel sided flame suitable for non-contact branding of food products. The apparatus of the invention eliminates or reduces the above-noted disadvantages of the prior art.

In particular, the residence time of meat in the flame generated by the burner is short so production rates may be maintained at a high level. Also, the flame can be switched off when it is not required, thereby reducing energy consumption significantly.

In practice, of course, the apparatus of the invention is embodied as a plurality of series of first orifices spaced from one another by respective series of the second orifices. This allows the substantially simultaneous production of multiple brand lines on a food product that typically passes under the apparatus on a moving conveyor.

Herein "combustion vitiating gas" means a gas that does not support combustion of the combustible gas. The combustible gas may be eg. a mixture of a combustible gas such as natural gas, methane, butane, propane etc.; and air or oxygen. The process of vitiating combustion of such a mixture includes diluting the oxygen content of the combustible gas mixture so that combustion is inhibited. The combustion vitiating gas is preferably a cold gas that additionally cools the flame where it impinges on it.

Combustible liquids may also be used as fuels for the apparatus of the invention, although such liquid fuels require pre-vaporisation before mixing and combustion.

Conveniently the first orifices are in a line flanked on either side by a series of said second orifices.

This allows the burner of the invention to generate a linear flame suitable for producing straight brand lines on a food product.

In preferred embodiments the invention includes one or more series of third orifices for emitting a combustible gas, each series of third orifices lying intermediate the series of first orifices and a said series of second orifices.

The third orifices advantageously assist in stabilising the flame generated at the first orifices.

Conveniently, while the combustible gas burns and the combustion vitiating gas flows, the line of first orifices generates an elongate flame less than 10mm wide at a distance, measured perpendicular to the line of first orifices, of up to 50mm from the said line.

This design of flame is particularly suitable for marking the surfaces of cuts of meat, especially poultry products.

More particularly, the elongate flame is preferably but not necessarily less than 7mm wide at a distance, measured perpendicular to the line of first orifices, of up to 50mm from the said line.

This kind of flame most accurately simulates the effect of griddle cooking in meat, without the disadvantages of contact branding.

In a preferred construction of the gas burner, the first and second orifices are formed in a surface of a block, the first and second orifices communicating with respective conduits for combustible gas and combustion vitiating gas, the conduits being supported by the block.

This unitary construction is advantageously simple to install and maintain.

The block may preferably include one or more recesses in the said surface each extending intermediate the series of first orifices and a series of second orifices, a series of the third orifices being formed in each said recess and each third orifice communicating with a conduit for combustible gas, the conduit being supported by the block. This arrangement allows correct positioning of the third orifices to enable them to carry out their flame stabilising function.

Conveniently the burner includes a plurality of said blocks in a series whereby to generate a plurality of elongate flames.

This arrangement avoids thermal stressing that may otherwise arise if a plurality of the series of first orifices are supported in a single block.

In the aforementioned arrangement, the blocks are preferably secured in a frame so that the flames extend generally parallel to one another in their respective elongate dimensions. This allows marking of a pattern of parallel. brand lines onto a food product.

Conveniently the frame supports an igniter for the combustible gas, especially a surface discharge igniter. This device, known *per se*, comprises a ceramic electrode that is surfaced with a semiconductor material. When a sufficiently high voltage is applied to the electrode, tracking of the voltage via the semiconductor generates a spark even if there is no air gap between the igniter and an adjacent charge sink. Thus the surface discharge igniter products a spark even when wet.

Consequently it is highly suitable for use in food processing machinery that requires regular washing.

Conveniently the conduits for the first and third orifices are connectable to supply a common combustible gas, although it is also desirable for the supply of combustible gas to the first and third orifices to be separately controllable.

In practical embodiments the gas burner of the invention will operate under the control of a controller that includes or is operatively connected to a first transducer, the controller being for switching: the supply of combustible gas to the first orifices; the supply of combustion vitiating gas to the second orifices; and the supply of combustible gas to the third orifices.

The supply of combustible gas via the first orifices and the supply of combustion vitiating gas via the second orifices occurs in dependence on signals generated by the first transducer.

Conveniently the controller includes or is operatively connected to a second transducer, whereby the controller switches the supply of combustible gas via the third orifices in dependence on signals generated by the second transducer.

Thus the extent to which the third orifices carry out their stabilising function may be controlled in dependence on the characteristics of the flame.

This feature ensures that the burner only consumes energy while operating to mark a food product.

Preferably the first transducer is a proximity sensor, since this kind of device is well suited for controlling operation of the gas burner in dependence on the arrival of meat products at the burner on a moving conveyor.

The controller also optionally includes or is operatively connected to a first transducer, whereby the controller switches the supply of combustible gas via the first orifices and the supply of combustion vitiating gas via the second orifices, in dependence on signals generated by the first transducer. Conveniently the transducer is a thermocouple, in particular a so-called "hypodermic" thermocouple. Such a device is adequately sensitive for use in the apparatus of the invention.

The apparatus of the invention may be manufactured in a range of sizes. Thus, for example, a comparatively large burner approximately the same width as a mass handling conveyor may be constructed and installed for use in food factories. A smaller version, capable of branding perhaps one or two cuts of meat at a time may be more suitable for use in food retailing environments such as restaurants.

In embodiments of the invention there are provided apparatuses according to Claims 21 to 24. These apparatuses are particularly suitable for installation in food factories although their elements may equally well be incorporated into apparatuses for use in retail outlets if desired.

In other, preferred embodiments of the invention there are provided apparatuses as defined in Claims 33 to 36.

The feature of Claim 36, of one or more rows of burner heads being longitudinally offset from one another, advantageously allows the orifices, and hence the flames produced thereby, to be closer together. The offsetting of rows of burner heads also allows successful countering of the effects of interaction between the gases supplied by the orifices. Thus, for these two reasons, the offsetting of the burner heads is advantageous in assisting the production of well defined, fine markings.

According to a second aspect of the invention, there is provided a method of marking a food product, in particular a piece of meat, comprising the steps of placing the piece of meat juxtaposed relative to the outlet of a gas burner of a food processing apparatus capable of generating an elongate flame less than 10mm wide at a distance of up to 50mm from the said outlet; and operating the said burner while simultaneously controlling the quantity of oxygen at the lateral boundaries of the flame.

This method may conveniently be carried out using the food processing apparatus of the invention.

Preferably the food product is placed adjacent a gas burner of a food processing apparatus capable of generating a plurality of generally parallel, elongate flames each less than 10mm wide at a distance up to 50mm from the outlets of the burner. In preferred embodiments the flame is substantially parallel sided. These features of the method may also conveniently be carried out using the apparatus of the invention.

Conveniently the step of controlling the quantity of oxygen includes applying a combustion vitiating gas to part of the flame generated by the gas burner.

The combustion vitiating gas preferably is Nitrogen, which is widely used in the food processing industry. Other gases, such as CO₂, may alternatively be used.

The method of processing a food product may also comprise the steps of applying a combustion vitiating gas to either side of the flame whereby to define a generally parallel sided valley that supports combustion flanked on either side by a region of combustion vitiating gas.

The apparatuses and methods of the invention are particularly suited to branding of meat products such as beef, poultry (especially chicken), pork, fish and game. Other food products, including but not limited to breads (including bread slices, rolls and loaves), pancakes, biscuits, snackfoods such as crisps, pastry products, cakes, sweetmeats, vegetables, fruit, potato based foods such as waffles and soya products may equally well be branded using the apparatuses and methods of the invention.

There now follows a description of preferred embodiments of the invention, by way of example with reference being made to the accompanying drawings in which:
Figure 1 is a vertically sectioned view of a flame produced in a gas burner of a food processing apparatus according to the invention, showing the principles of its generation;
Figure 2 is a perspective view of one embodiment of gas burner of a food processing apparatus according to the invention;
Figure 3 is a perspective view showing part of the Figure 2 apparatus in greater detail;
Figure 4 is a schematic representation of apparatus according to the invention as may be installed in a food factory; and
Figure 5 is a perspective view of another preferred embodiment of gas burner of a food processing apparatus according to the invention.

Referring to the drawings there is shown a burner 10 constituting part of a food processing apparatus according to the invention. Burner 10 comprises a burner head 11 that is constituted as an elongate block. Burner head 11 is manufactured from a non-combustible material that exhibits minimal thermal strain. Many steels are suitable for manufacture of burner head 11. Other possible materials include eg. cast or forged iron, aluminium, sintered metals, metal alloys and ceramics.

Burner head 11 includes a series of first orifices 12 that in the embodiment shown extend in a line parallel to the elongate axis of burner head 11.

The series of first orifices 12 may of course be arranged in other patterns, but the linear arrangement shown is preferable for generating the known straight brand markings on food products.

A respective series of second orifices 13 extends in a line along either side of the line of main orifices 12.

A respective series of third orifices 14 extends in a line along either side of the line of main orifices 12, intermediate the main orifices 12 and the second orifices 13.

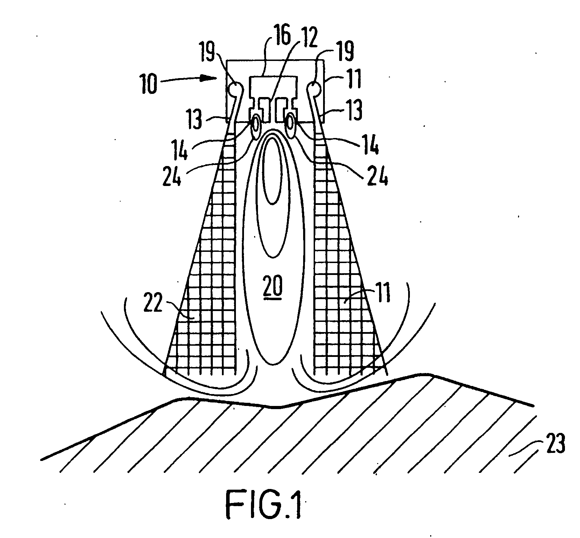

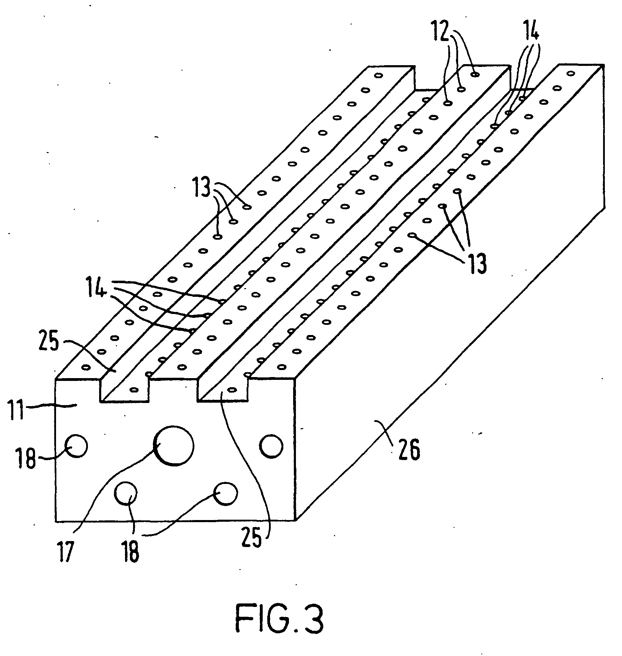

As is shown in Figures 1 and 3, the first 12 and third 14 orifices each communicate with a conduit for supplying a combustible gas such as an air/propane mixture; or a mixture of air and one or more other combustible gases such as those listed herein. In the Figure 1 embodiment the first and third orifices 12, 14 are connected to a common conduit 16 extending longitudinally through burner head 11. Figure 3 shows a preferred arrangement in which the orifices 12 and 14 are connected to respective conduits 17, 18 extending longitudinally through the burner head 11. Although the conduits 17 and 18 may be connected to a common source of combustible gas, the Figure 3 arrangement allows the supplies to the first 12 and third 14 orifices to be separately valved.

The second orifices 13 communicate with a conduit 19, extending longitudinally through burner head 11, for supplying a combustion vitiating gas such as Nitrogen.

Although the conduits 16 to 19 are shown extending through burner head 11, they may alternatively be discrete pipes that are simply supported relative to burner head 11.

Figure 1 shows the flame profile that arises when combustible gas, supplied via orifices 12 and 14, is burning while combustion vitiating gas is supplied via the orifices 13. The main combustion zone is supplied via the orifices 13. The main combustion zone 20 is essentially parallel sided since combustion only occurs in a parallel sided valley defined by the lateral regions 22 occupied by combustion vitiating gas from the orifices 13. The flame 20 is parallel sided for a significant distance measured perpendicular to the burner head 11, whereby the burner constituting part of a food processing apparatus of the invention may mark griddle brandings of substantially invariant width (denoted by "brand width" in Figure 1), regardless of the height of the surface of a food product 23 passing beneath the burner 10 on a moving conveyor.

Figure 1 also shows that in zones (denoted by "side band") to either side of the combustion zone 20 the vitiating gas cools the products of combustion so that no charring of the food product 23 occurs outside the intended brand. This cooling effect also minimises the heat dissipated to the atmosphere, thereby reducing the need for air cooling in the vicinity of the burner 10.

In practical embodiments the gas burner 10 can be adjusted to produce a combustion zone 20 that is less than 10mm, and preferably less than 7mm, wide over a distance of at least 10mm, preferably up to 50mm and most preferably 20mm, measured perpendicular to the burner head 11.

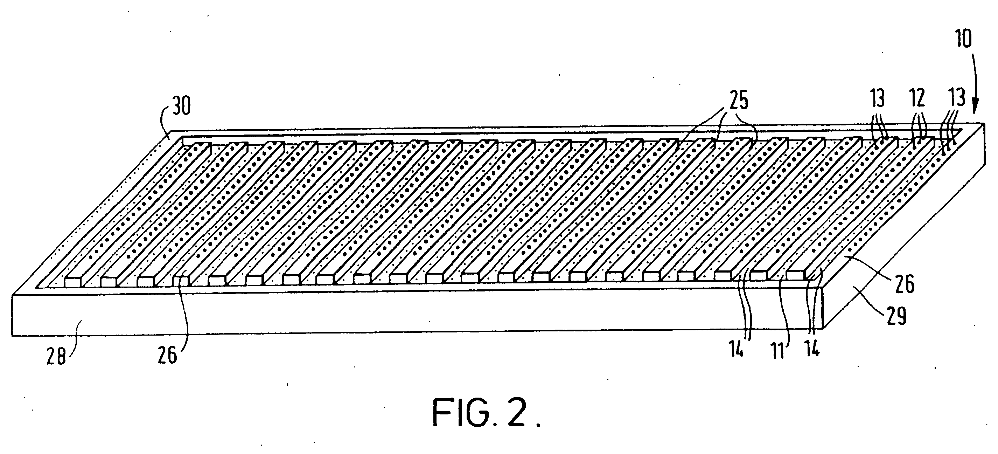

The third orifices 14 produce small combustion zones 24 that assist in stabilising the main combustion zone 20. This effect is enhanced if as shown in Figures 2 and 3 the third orifices 14 are formed in recesses 25 extending parallel to the lines of orifices 12, 13.

Figures 2 and 3 show that the burner head 11 may be configured as a generally rectangular module or block 26, and that a plurality of the blocks 26 may be secured side by side in a frame 28. This permits the generation of multiple, parallel flames 20 for simultaneously marking a plurality of brand lines onto a food product 23, without undesirable thermal stressing that would arise if all the orifices and conduits were formed in a single block.

As is indicated schematically by reference numeral 29 in Figure 2, frame 28 supports a *per se* known igniter that preferably is of the surface discharge type described herein.

At a location 30 on frame 28 remote from igniter 29 frame 28 also supports a flame monitor preferably in the form of a thermocouple that is preferably of the *per se* known hypodermic type described herein. The flame monitor may alternatively be of another, known type.

The thermocouple and igniter are connected in a control circuit for the burner 10. The majority of the control circuit, other than the wiring, any transducers, the igniter, the thermocouple and control valves for the supply of gases, may be constituted as a programmable device such as a microprocessor. Alternatively an electromechanical device or even an entirely mechanical control apparatus may be used.

The preferred control circuit includes a proximity sensor of *per se* known design. The proximity sensor detects the approach of a food product 23 towards the burner 10. In response to activation of the proximity sensor, the programmable device switches on the supplies of gases via the conduits 17-19 (eg. by operating valves in the conduits); and activates the igniter. This sequence results in establishment of a plurality of mutually parallel, parallel sided flames, each as shown in Figure 1, by the time the food product 23 arrives under the burner 10. As the food product passes under burner 10 it is marked with the required brand marks.

The thermocouple monitors the temperature of the flame nearest to it and generates data signals that are interpreted by the programmable device. In some embodiments the programmable device may adjust the flow of combustible gas to the third orifices 14, in order to maintain the desired shape and temperature of the main combustion zone 20.

Once the food product 23 passes beyond the burner 10, a proximity sensor transmits a further signal to the programmable device. The further signal prompts the programmable device to switch off the gas supplies until arrival of a further food product 23 for branding.

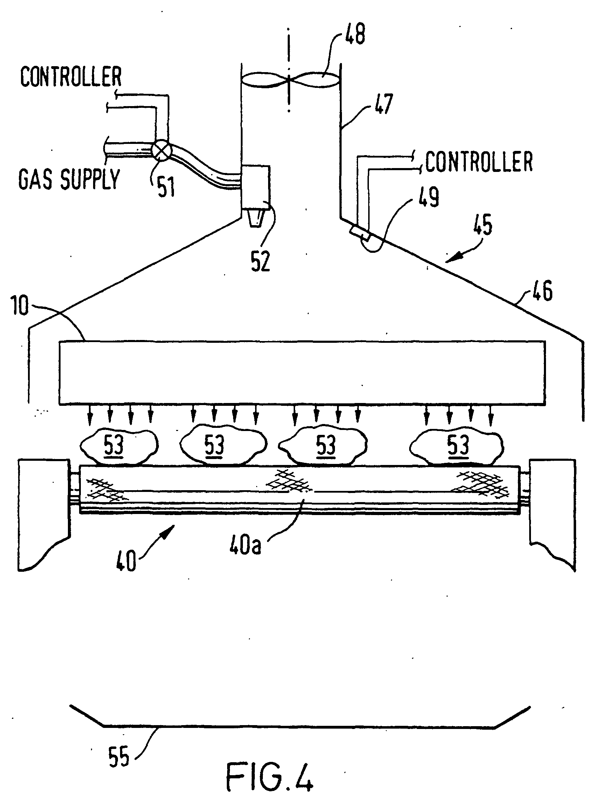

Figure 4 shows a typical installation of apparatus according to the invention in a food production factory, especially a meat production factory such as a chicken products factory.

In Figure 4, a burner 10 as described herein is suspended above a powered mass handling conveyor 40 of *per se* known design, so that the flames generated by burner 10 play downwardly towards conveyor 40 as indicated by the arrows in Figure 4. In the preferred embodiment, the food products (eg. chicken "butterfly" portions) are supported on an endless, woven wire conveyor belt 40a that extends about *per se* known, powered rollers. The woven belt 40a may include a *per se* known tensioning mechanism. The rollers may include a *per se* known speed control mechanism such as a gearbox, tachometer pulse generator and controller combination.

An extractor 45 overlies the burner 10 and conveyor 40 so as to extract or remove gases produced during operation of the assembly. Extractor 45 includes a generally pyramidal hood 46 that entraps upwardly travelling gases. At its apex the interior of hood 46 connects to an upwardly extending duct 47. including an extractor device such as a fan 48 that draws gases upwardly from the vicinity of burner 10. Duct 47 exhausts eg. to atmosphere or to a filter, tank or gas conversion device.

A flame or heat sensitive transducer 49 operatively connected to a controller such as a programmable device is secured on hood 46 remote from burner 10. The controller is also operatively connected to a valve 51 capable of switching a supply of combustion extinguishing gas that may be supplied to the interior of hood 10 via one or more nozzles 52.

The apparatus also optionally includes a drip tray 55 for catching eg. fats, marinades, sauces and other substances falling from the food pieces 53 through the conveyor 40a.

In use of the apparatus of Figure 4, food products such as poultry pieces 53 advance under the flames generated by burner 10. This brands the food products as desired. During this process the hood 46 and fan 48 extract the combustion gases via duct 47. In the event of transducer 49 detecting excessive combustion (as may arise eg. as a result of spillage of fat from the food products) the controller opens the valve 51 to flood the vicinity of burner 10 and conveyor 40 with a combustion extinguishing gas. Instead of a combustion extinguishing gas a liquid or vapour may be used but is less preferred because of the danger of contamination of the apparatus and food products.

In the arrangement of Figure 4 the conveyor is intended to operate continuously with the flames being switched on and off as described herein to coincide with the arrival and departure of the food products. It is possible to derive embodiments within the scope of the invention in which the conveyor 40 is dispensed with and the burner 10 is moveable relative to stationary food products in order to produce the preferred linear branding.

A further possibility is for the conveyor 40 to be controlled to slow or halt the food products when they pass under burner 10. Halting of the food products allows branding of non-linear brand marks such as words and logos, using a suitable pattern of outlets in the burner 10.

In a practical embodiment this may be achieved by adding an indexing control to the conveyor belt 40a that advances the belt at intervals eg. 5, 10 or 15 seconds. This would give each food piece 53 a residence time of eg. 5, 10 or 15 seconds, depending on the nature and/or setting of the indexing control, under the burner 10. This would permit the branding of eg. a shape, pattern or logo onto the meat pieces, without the branding lines becoming blurred as a result of movement of the meat pieces relative to the burner 10.

At the end of the residence period the flames produced by the burner are extinguished or at least reduced to allow movement of the conveyor without producing blurred branding lines on the food products. For this purpose the indexing control and the controller for the supplies of combustible and combustion-vitiating gas may be operatively linked, as may the switching control for the igniter (in the event of the flames being completely extinguished while the conveyor indexes forwardly).

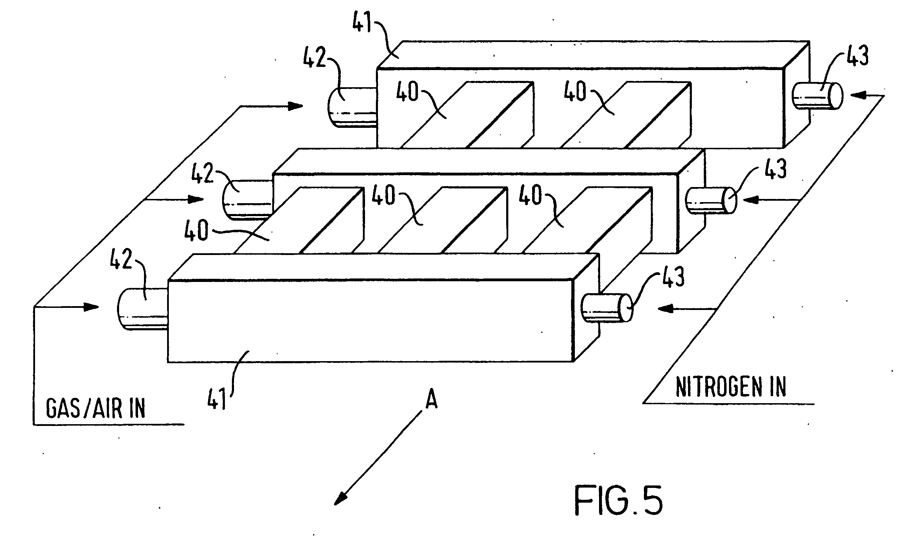

Figure 5 shows another embodiment of gas burner constituting part of a food processing apparatus according to the invention

In Figure 5 there is shown an array of burner heads 40 supported in a matrix of gas supply manifold branches 41. Each burner head 40, which in the embodiment shown is an elongate square section member, includes at least one series of first orifices, flanked by second orifices. All the orifices open on the lower face of each burner head 40 shown. In practice each burner head would include a plurality of the first and second orifices in an arrangement similar to that of the first 12 and second 13 orifices in Figure 2. The burner heads may also include one or more of the third orifices 14 of Figure 2. Thus each burner head 40 includes at least one, and preferably more than one, row of orifices in a line extending parallel to the elongate axis of the burner head 40. The burner heads 40 extend generally parallel to one another.

The manifold branches extend perpendicular to the elongate axes of the burner heads 40. The burner heads 40 are secured at either end to a respective manifold branch 41.

Each manifold branch 41 includes within its interior a pair of conduits 42, 43 respectively for supplying combustible gas and combustion vitiating gas to the burner heads.

The burner heads 40 are arranged in rows that are laterally offset from one another in the longitudinal direction of the rows, i.e. perpendicular to the elongate direction of the burner heads. This "staggering" of the lines of orifices defined by the burner heads gives rise to the close spacing and anti-interaction advantage disclosed hereinbefore.

The arrow A shows the preferred direction of movement of a conveyor, such as belt 40a of Figure 4, under the burner of Figure 5. Arrow A assists in establishing the direction of the lines marked onto the food products passing under the gas burner, and hence the effect of offsetting the rows of burner heads 40.

## Claims

1. A food processing apparatus comprising a gas burner (10) that includes a series of first orifices (12) for emitting a combustible gas flanked by one or more series of second orifices (13) for emitting a combustion vitiating gas, whereby, on burning of a combustible gas emitted via the first orifices (12), the emission of a combustion vitiating gas via the second orifices (13) modifies the shape of the flame created by the first orifices (12).

2. A food processing apparatus according to Claim 1 wherein the first orifices (12) are in a line flanked on either side by a series of said second orifices (13).

3. A food processing apparatus according to Claim 1 or Claim 2 including one or more series of third orifices (14) for emitting a combustible gas, each series of third orifices (14) lying intermediate the series of first orifices (12) and a said series of second orifices (13).

4. A food processing apparatus according to Claim 2 or Claim 3 wherein while the combustible gas burns and a combustion vitiating gas flows the series of first orifices (12) generates a flame (20) defining a plurality of lines in a pattern.

5. A food processing apparatus according to Claim 2 or any claim dependent therefrom, wherein while the combustible gas burns and a combustion vitiating gas flows the line of first orifices (12) generates an elongate flame (20).

6. A food processing apparatus according to any preceding claim wherein the flame (20) is less than 10mm wide at a distance, measured perpendicular to the line of first orifices (12), of up to 50mm from the said line.

7. A food processing apparatus according to Claim 6 wherein the elongate flame is less than 7mm wide at a distance, measured perpendicular to the line of first orifices (12), of up to 50mm from the said line.

8. A food processing apparatus according to any preceding claim wherein the first (12) and second orifices (13) are formed in a surface of a block (26), the first (12) and second (13) orifices communicating with respective conduits (16; 17; 19) for combustible gas and combustion vitiating gas, the conduits (16; 19) being supported by the block (26).

9. A food processing apparatus according to Claim 8 including one or more recesses (25) in the said surface each extending intermediate the series of first orifices (12) and a series of second orifices (13), a series of the third orifices (14) being formed in each said recess (25) and each third orifice (14) communicating with a conduit (16; 18) for combustible gas, the conduit (16; 18) being supported by the block (26).

10. A food processing apparatus according to Claim 8 or Claim 9 comprising a plurality of said blocks (26) in a series whereby to generate a plurality of elongate flames (20).

11. A food processing apparatus according to Claim 10 wherein the blocks (26) are secured in a frame (28) so that the flames (20) extend generally parallel to one another.

12. A food processing apparatus according to Claim 11 wherein the frame (28) supports an igniter (29) for the combustible gas.

13. A food processing apparatus according to any preceding claim including a surface discharge igniter for the combustible gas or gases.

14. A food processing apparatus according to Claim 9 when dependent from Claim 8, or any claim depending from Claim 9 when depending from Claim 8, wherein the conduits (16; 17) for combustible gas are connected to supply a common combustible gas.

15. A food processing apparatus according to Claim 3 or any preceding claim dependent therefrom under the control of a controller for switching:
the supply of combustible gas to the first orifices (12);
the supply of combustion vitiating gas to the second orifices (13); and
the supply of combustible gas to the third orifices (14).

16. A food processing apparatus according to Claim 15 wherein the controller includes or is operatively connected to a first transducer, whereby the controller switches the supply of combustible gas via the first orifices (12) and the supply of combustion vitiating gas via the second orifices (13), in dependence on signals generated by the first transducer.

17. A food processing apparatus according to Claim 16 wherein the first transducer is a proximity sensor.

18. A food processor apparatus according to any of Claims 15 to 17 wherein the controller includes or is operatively connected to a second transducer, whereby the controller adjusts the supply of combustible gas via the third orifices (14) in dependence on signals generated by the second transducer.

19. A food processing apparatus according to Claim 18 wherein the second transducer is a thermocouple.

20. A food processing apparatus according to Claim 19 wherein the thermocouple is a hypodermic thermocouple.

21. A food processing apparatus according to any preceding claim wherein the gas burner (10) is juxtaposed relative to a conveyor (40) for conveying food products (53), whereby the gas burner (10) is capable of branding food products (53) passing by it on the conveyor (40).

22. An apparatus according to Claim 21 wherein the gas burner (10) overlies the conveyor (40) so that the flame generated by the burner (10) extends downwardly towards the conveyor (40).

23. A food processing apparatus according to any preceding claim wherein the gas burner (10) is in combination with an extractor (45) arranged to extract gases generated by operation of the burner (10).

24. An apparatus according to Claim 23 wherein the extractor (45) is an extractor hood (46).

25. A food processing apparatus according to any preceding claims wherein the gas burner (10) is in combination with an automatic fire extinguisher comprising a heat or flame sensitive transducer (49) remote from the gas burner (10), and the apparatus further includes.
a controller for the extinguisher; and
a switchable source (51) of a combustion extinguishing medium,
whereby on the transducer (49) detecting a predetermined heat or flame intensity value the controller operates to supply the combustion extinguishing gas to the gas burner (10) and extinguish its flame.

26. A method of marking a piece of meat comprising the steps of placing the piece of meat juxtaposed relative to the outlet of a gas burner (10) of a food processing apparatus capable of generating an elongate flame (20) less than 10mm wide at a distance of up to 50mm from the said outlet; and
operating the said burner (10) while simultaneously controlling the quantity of oxygen at the lateral boundaries of the flame (20).

27. A method according to Claim 26 wherein the meat is placed adjacent a gas burner (10) capable of generating a plurality of generally parallel, elongate flames (20) each less than 10mm wide at a distance up to 50mm from the outlets of the burner (10).

28. A method according to Claim 26 or Claim 27, wherein the or each flame (20) is substantially parallel sided.

29. A method according to any of Claims 26 to 28 wherein the step of controlling the quantity of oxygen includes applying a combustion vitiating gas to part of the flame (20) generated by the gas burner (10).

30. A method according to any of Claims 26 to 29 wherein the combustion vitiating gas is Nitrogen.

31. A method according to any of Claims 26 to 30, wherein the food processing apparatus accords to any of Claims 1 to 20.

32. A method of products marking a piece of meat according to claim 26 including the steps of applying a combustion vitiating gas to either side of the flame (20) whereby to define a generally parallel sided valley that supports combustion flanked on either side by a region of combustion vitiating gas.

33. A food processing apparatus according to any of Claims I to 7, or any of Claims 13, 15, 16, 17, 18, 19 and 20 when dependent from any of Claims 1 to 7, wherein at least the first and second orifices are formed in a series of burner heads (40) defining an array of burner heads (40), each said burner head (40) being supported on and in fluid communication with at least one branch of a gas supply manifold (41) for supplying combustible gas and combustion vitiating gas respectively to the first and second orifices.

34. A food processing apparatus according to Claim 33 wherein each branch of the manifold (41) includes separate conduits (42; 43) respectively for supplying combustible gas to one or more said first orifices and combustion vitiating gas to one or more second said orifices.

35. A food processing apparatus according to Claim 33 or Claim 34, wherein the burner heads (40) are supported in rows on the manifold (41).

36. A food processing apparatus according to Claim 35 wherein the burner heads (40) of each row are offset, in the longitudinal direction of the row, from the burner heads (40) of an adjacent said row.

## Patentansprüche

1. Lebensmittel-Bearbeitungsvorrichtung, die einen Gasbrenner (10) umfaßt, der eine Gruppe von ersten Öffnungen (12) zum Emittieren eines brennbaren Gases umfaßt, die von einer oder mehreren Gruppen von zweiten Öffnungen (13) zum Emittieren eines die Verbrennung behindernden Gases flankiert sind, wobei beim Verbrennen eines brennbaren Gases, das durch die ersten Öffnungen (12) emittiert wird, die Emission eines die Verbrennung behindernden Gases durch die zweiten Öffnungen (13) die Form der von den ersten Öffnungen (12) erzeugten Flamme verändert.

2. Lebensmittel-Bearbeitungsvorrichtung nach Anspruch 1, bei der die ersten Öffnungen (12) auf einer Linie angeordnet sind, die auf beiden Seiten durch eine Gruppe von zweiten Öffnungen (13) flankiert ist.

3. Lebensmittel-Bearbeitungsvorrichtung nach Anspruch 1 oder 2, die eine oder mehrere Gruppen von dritten Öffnungen (14) zum Emittieren eines brennbaren Gases umfaßt, wobei jede Gruppe der dritten Öffnungen (14) zwischen der Gruppe von ersten Öffnungen (12) und der Gruppe von zweiten Öffnungen (13) liegt.

4. Lebensmittel-Bearbeitungsvorrichtung nach Anspruch 2 oder 3, bei der dann, wenn das brennbare Gas brennt und ein die Verbrennung behinderndes Gas strömt, die Gruppe von ersten Öffnungen (12) eine Flamme (20) erzeugt, die eine Vielzahl von Linien gemäß einem Muster definiert.

5. Lebensmittel-Bearbeitungsvorrichtung nach Anspruch 2 oder jedem hiervon abhängigen Anspruch, bei der dann, wenn das brennbare Gas brennt und ein die Verbrennung behinderndes Gas strömt, die Linie der ersten Öffnungen (12) eine langgestreckte Flamme (20) erzeugt.

6. Lebensmittel-Verarbeitungsvorrichtung nach einem der vorhergehenden Ansprüche, bei der die Flamme (20) in einem senkrecht zur Linie der ersten Öffriungen (12) gemessenen Abstand von bis zu 50 mm von dieser Linie weniger als 10 mm breit ist.

7. Lebensmittel-Bearbeitungsvorrichtung nach Anspruch 6, bei der die langgestreckte Flamme in einem senkrecht zur Linie der ersten Öffnungen (12) gemessenen Abstand von bis zu 50 mm von dieser Linie weniger als 7 mm breit ist.

8. Lebensmittel-Bearbeitungsvorrichtung nach einem der vorhergehenden Ansprüche, bei der die ersten Öffnungen (12) und die zweiten Öffnungen (13) in der Oberfläche eines Blockes (26) ausgebildet sind, wobei die ersten Öffnungen (12) und die zweiten Öffnungen (13) mit entsprechenden Leitungen (16; 17; 19) für ein brennbares Gas und ein die Verbrennung behinderndes Gas in Verbindung stehen und die Leitungen (16; 19) vom Block (26) getragen sind.

9. Lebensmittel-Bearbeitungsvorrichtung nach Anspruch 8, die ein oder mehrere Vertiefungen (25) in besagter Oberfläche umfaßt, von denen sich jede zwischen der Gruppe der ersten Öffnungen (12) und einer Gruppe von zweiten Öffnungen (13) erstreckt, wobei eine Gruppe von dritten Öffnungen (14) in jede dieser Vertiefungen (25) ausgebildet ist, jede dritte Öffnung (14) mit einer Leitung (16; 18) für ein brennbares Gas in Verbindung steht und die Leitung (16; 18) vom Block (26) getragen ist.

10. Lebensmittel-Bearbeitungsvorrichtung nach Anspruch 8 oder 9, die eine Vielzahl von solchen Blöcken (26) in einer Gruppe umfaßt, wodurch eine Vielzahl von langgestreckten Flammen (20) erzeugbar ist.

11. Lebensmittel-Bearbeitungsvorrichtung nach Anspruch 10, bei der die Blöcke (26) in einem Rahmen (28) befestigt sind, so daß sich die Flammen (20) im wesentlichen parallel zueinander erstrecken.

12. Lebensmittel-Bearbeitungsvorrichtung nach Anspruch 11, bei der der Rahmen (28) einen Zünder (29) für das brennbare Gas trägt.

13. Lebensmittel-Bearbeitungsvorrichtung nach einem der vorhergehenden Ansprüche, die einen Oberflächen-Entladungs-Zünder für das brennbare Gas oder die brennbaren Gase umfaßt.

14. Lebensmittel-Bearbeitungsvorrichtung nach Anspruch 9 soweit er von Anspruch 8 abhängt oder jedem von Anspruch 9 abhängigen Anspruch soweit er von Anspruch 8 abhängt, bei der die Leitungen (16; 17) für brennbares Gas miteinander verbunden sind, um ein gemeinsames brennbares Gas zuzuführen.

15. Lebensmittel-Bearbeitungsvorrichtung nach Anspruch 3 oder jedem hiervon abhängigen vorhergehenden Anspruch unter der Steuerung einer Steuerungseinrichtung zum Schalten
- der Zufuhr von brennbarem Gas zu den ersten Öffnungen (12),
- der Zufuhr von die Verbrennung behinderndem Gas zu den zweiten Öffnungen (13) und
- der Zufuhr von brennbarem Gas zu den dritten Öffnungen (14).

16. Lebensmittel-Bearbeitungsvorrichtung nach Anspruch 15, bei der die Steuerungseinrichtung einen ersten ÜbertrAger umfaßt oder mit einem solchen betriebsmäßig verbunden ist, wobei die Steuerungseinrichtung die Zufuhr von brennbarem Gas über die ersten Öffnungen (12) und die Zufuhr von die Verbrennung behinderndem Gas über die zweiten Öffnungen (13) in Abhängigkeit von Signalen schaltet, die vom ersten Übertrager erzeugt werden.

17. Lebensmittel-Bearbeitungsvorrichtung nach Anspruch 16, bei der der erste Übertrager ein Näherungssensor ist.

18. Lebensmittel-Bearbeitungsvorrichtung nach einem der Ansprüche 15 bis 17, bei der die Steuerungseinrichtung einen zweiten Übertrager umfaßt oder mit einem solchen betriebsmäßig verbunden ist, wodurch die Steuerungseinrichtung die Zufuhr von brennbarem Gas über die dritten Öffnungen (14) in Abhängigkeit von Signalen einstellt, die vom zweiten Übertrager erzeugt werden.

19. Lebensmittel-Bearbeitungsvorrichtung nach Anspruch 18, bei der der zweite Übertrager ein Thermoelement ist.

20. Lebensmittel-Bearbeitungsvorrichtung nach Anspruch 19, bei der das Thermoelement ein hypodermisches Thermoelement ist.

21. Lebensmittel-Bearbeitungsvorrichtung nach einem der vorhergehenden Ansprüche, bei der der Gasbrenner (10) in unmittelbarer Nähe einer Fördereinrichtung (40) zum Fördern von Lebensmittelprodukten (53) angeordnet ist, wodurch der Gasbrenner (10) in der Lage ist, Lebensmittelprodukte (53) anzusengen, die sich an ihm auf der Fördereinrichtung (40) vorüber bewegen.

22. Lebensmittel-Bearbeitungsvorrichtung nach Anspruch 21, bei der der Gasbrenner (10) oberhalb der Fördereinrichtung (40) so angeordnet ist, daß die vom Brenner. (10) erzeugte Flamme sich nach unten zur Fördereinrichtung (40) hin erstreckt.

23. Lebensmittel-Bearbeitungsvorrichtung nach einem der vorhergehenden Ansprüche, bei der der Gasbrenner (10) mit einer Abzugsvorrichtung (45) kombiniert ist, die dazu ausgebildet ist, die durch den Betrieb des Brenners (10) erzeugten Gase abzuziehen.

24. Vorrichtung nach Anspruch 23, bei der die Abzugvorrichtung (45) eine Abzugshaube (46) ist.

25. Lebensmittel-Bearbeitungsvorrichtung nach einem der vorhergehenden Ansprüche, bei der der Gasbrenner (10) mit einem automatischen Feuerlöscher kombiniert ist, der einen hitze- oder flammen-empfindlichen Übertrager (49) entfernt vom Gasbrenner (10) umfaßt, und wobei die Vorrichtung weiterhin folgende Bestandteile aufweist:
- eine Steuerung für den Löscher und
- eine schaltbare Quelle (51) für ein die Verbrennung löschendes Medium,
wodurch dann, wenn der Übertrager (49) einen vorbestimmten Hitze- oder Flammen-Intensitätswert erkennt, die Steuerung so arbeitet, daß sie dem Gasbrenner (10) das die Verbrennung löschende Gas zuführt und seine Flamme löscht.

26. Verfahren zum Markieren eines Stücks Fleisch, das folgende Schritte umfaßt:
Anordnen des Stücks Fleisch in der Nähe des Auslasses eines Gasbrenners (10) einer Lebensmittel-Bearbeitungsvorrichtung, der in der Lage ist, eine langgestreckte Flamme (20) zu erzeugen, die in einem Abstand von bis zu 50 mm von dem Auslaß weniger als 10 mm breit ist, und
Betreiben des Brenners (10) unter gleichzeitiger Steuerung der Sauerstoffmenge an den seitlichen Grenzen der Flamme (20).

27. Verfahren nach Anspruch 26, bei dem das Fleisch in der Nähe eines Gasbrenners (10) angeordnet wird, der in der Lage ist, eine Vielzahl von im wesentlichen parallelen, langgestreckten Flammen (20) zu erzeugen, von denen jede in einem Abstand von bis zu 50 mm von den Auslaßöffnungen des Brenners (10) weniger als 10 mm breit ist.

28. Verfahren nach Anspruch 26 oder 27, bei dem die oder jede Flamme (20) im wesentlichen zueinander parallele Seiten aufweist.

29. Verfahren nach einem der Ansprüche 26 bis 28, bei dem der Schritt der Steuerung der Menge des Sauerstoffes das Anlegen eines die Verbrennung behindernden Gases an einen Teil der vom Gasbrenner (10) erzeugten Flamme (20) umfaßt.

30. Verfahren nach einem der Ansprüche 26 bis 29, bei dem das die Verbrennung behindernde Gas Stickstoff ist.

31. Verfahren nach einem der Ansprüche 26 bis 30, bei dem die Lebensmittel-Bearbeitungsvorrichtung gemäß einem der Ansprüche 1 bis 20 ausgebildet ist.

32. Verfahren zum Markieren eine Stücks Fleisch nach Anspruch 26, das den Schritt umfaßt, daß ein die Verbrennung behinderndes Gas auf beiden Seiten der Flamme (20) angelegt wird, um hierdurch ein im wesentlichen parallele Seiten besitzendes Tal zu definieren, das die Verbrennung fördert und auf beiden Seiten durch einen Bereich mit die Verbrennung behinderndem Gas flankiert ist.

33. Lebensmittel-Bearbeitungsvorrichtung nach einem der Ansprüche 1 bis 7 oder einem der Ansprüche 13, 15, 16, 17, 18, 19 und 20 soweit diese von einem der Ansprüche 1 bis 7 abhängig sind, bei der wenigstens die ersten und zweiten Öffnungen in einer Gruppe von Brennerköpfen (40) ausgebildet sind, die eine Anordnung von Brennerköpfen (40) definieren, wobei jeder Brennerkopf (40) von wenigstens einem Zweig einer Gaszuführungs-Hauptleitung (41) getragen wird und mit ihm in Strömungsverbindung steht, um brennbares Gas bzw. die Verbrennung behinderndes Gas den ersten bzw. zweiten Öffnungen zuzuführen.

34. Lebensmittel-Bearbeitungsvorrichtung nach Anspruch 33, bei der jeder Zweig der Hauptleitung (41) getrennte Leitungen (42, 43) jeweils zur Zufuhr von brennbarem Gas zu einer oder mehreren der ersten Öffnungen und von die Verbrennung behinderndem Gas zu einer oder mehreren der zweiten Öffnungen umfaßt.

35. Lebensmittel-Bearbeitungsvorrichtung nach Anspruch 33 oder 34, bei der die Brennerköpfe (40) in Reihen auf der Hauptleitung (41) getragen sind.

36. Lebensmittel-Bearbeitungsvorrichtung nach Anspruch 35, bei der die Brennerköpfe (40) einer jeden Reihe in Längsrichtung der Gruppe gegen die Brennerköpfe (40) einer benachbarten Reihe versetzt angeordnet sind.

## Revendications

1. Appareil de traitement de la nourriture comprenant un brûleur à gaz (10) comportant une série de premiers orifices (12) pour dégager un gaz combustible flanqué d'une ou de plusieurs séries de deuxièmes orifices (13) pour dégager un gaz viciant la combustion, ce par quoi, lors de l'inflammation d'un gaz combustible dégagé par les premiers orifices (12), l'émission d'un gaz viciant la combustion par les deuxièmes orifices (13) modifie la forme de la flamme créée par les premiers orifices (12).

2. Appareil de traitement de la nourriture selon la revendication 1, dans lequel les premiers orifices (12) sont en ligne flanqués de chaque côté par une série desdits deuxièmes orifices (13).

3. Appareil de traitement de la nourriture selon la revendication 1 ou la revendication 2 comprenant une ou plusieurs séries de troisièmes orifices (14) pour émettre un gaz combustible, chaque série de troisièmes orifices (14) étant située de façon intermédiaire à la série de premiers orifices (12) et à ladite série de deuxièmes orifices (13).

4. Appareil de traitement de la nourriture selon la revendication 2 ou la revendication 3, dans lequel alors que le gaz de combustion brûle et qu'un gaz viciant la combustion circule, la série des premiers orifices (12) génère une flamme (20) définissant une pluralité de lignes dans un modèle.

5. Appareil de traitement de la nourriture selon la revendication 2 ou une quelconque revendication dépendante de celle-ci, dans lequel alors que le gaz combustible brûle et qu'un gaz viciant la combustion circule, la ligne des premiers orifices (12) génère une flamme allongée (20).

6. Appareil de traitement de la nourriture selon l'une quelconque des revendications précédentes dans lequel la flamme (20) est d'une largeur inférieure à 10 mm à une distance, mesurée perpendiculairement à la ligne des premiers orifices (12), allant jusqu'à 50 mm à partir de ladite ligne.

7. Appareil de traitement de la nourriture selon la revendication 6, dans lequel la largeur de la flamme allongée est inférieure à 7 mm à une distance, mesurée perpendiculairement à la ligne des premiers orifices (12), allant jusqu'à 50 mm à partir de ladite ligne.

8. Appareil de traitement de la nourriture selon l'une quelconque des revendications précédentes, dans lequel les premiers (12) et deuxièmes orifices (13) sont formés dans une surface d'un bloc (26), les premiers (12) et deuxièmes (13) orifices communiquant avec des conduits respectifs (16 ; 17 ; 19) pour le gaz combustible et le gaz viciant la combustion, les conduits (16 ; 19) étant supportés par le bloc (26).

9. Appareil de traitement de la nourriture selon la revendication 8, comprenant un ou plusieurs évidements (25) dans ladite surface s'étendant chacun de façon intermédiaire à la série des premiers orifices (12) et à une série des deuxièmes orifices (13), une série des troisièmes orifices (14) étant formée dans chaque dit évidement (25) et chaque troisième orifice (14) communiquant avec un conduit (16 ; 18) pour le gaz combustible, le conduit (16 ; 18) étant supporté par le bloc (26).

10. Appareil de traitement de la nourriture selon la revendication 8 ou la revendication 9 comprenant une pluralité desdits blocs (26) dans une série, générant de ce fait une pluralité de flammes allongées (20).

11. Appareil de traitement de la nourriture selon la revendication 10, dans lequel les blocs (26) sont fixés dans un cadre (28) de sorte que les flammes (20) s'étendent d'une manière générale parallèlement les unes aux autres.

12. Appareil de traitement de la nourriture selon la revendication 11, dans lequel le cadre (28) supporte un appareil d'allumage (29) pour le gaz combustible.

13. Appareil de traitement selon l'une quelconque des revendications précédentes comprenant un appareil d'allumage à décharge superficielle pour le ou les gaz combustible(s).

14. Appareil de traitement de la nourriture selon la revendication 9 si dépendante de la revendication 8, ou selon une quelconque revendication dépendante de la revendication 9 si dépendante de la revendication 8, dans lequel les conduits (16 ; 17) pour le gaz combustible sont reliés pour fournir un gaz combustible commun.

15. Appareil de traitement de la nourriture selon la revendication 3 ou une quelconque revendication précédente dépendante de celle-ci commandé par un dispositif de commande pour commuter :
l'alimentation d'un gaz combustible vers les premiers orifices (12) ;
l'alimentation d'un gaz viciant la combustion vers les deuxièmes orifices (13) ; et
l'alimentation d'un gaz combustible vers les troisièmes orifices (14).

16. Appareil de traitement de la nourriture selon la revendication 15, dans lequel le dispositif de commande comprend ou est relié de façon fonctionnelle à un premier transducteur, le dispositif de commande commutant l'alimentation du gaz combustible par les premiers orifices (12) et l'alimentation du gaz viciant la combustion par les deuxièmes orifices (13), en fonction des signaux générés par le premier transducteur.

17. Appareil de traitement de la nourriture selon la revendication 16, dans lequel le premier transducteur est un détecteur de proximité.

18. Appareil de traitement de la nourriture selon l'une des revendications 15 à 17, dans lequel le dispositif de commande comprend ou est relié de façon fonctionnelle à un deuxième transducteur, le dispositif de commande ajustant l'alimentation du gaz combustible au moyen des troisièmes orifices (14) en fonction des signaux générés par le deuxième transducteur.

19. Appareil de traitement de la nourriture selon la revendication 18, dans lequel le deuxième transducteur est un thermocouple.

20. Appareil de traitement de la nourriture selon la revendication 19, dans lequel le thermocouple est un thermocouple hypodermique.

21. Appareil de traitement de la nourriture selon l'une quelconque des revendications précédentes, dans lequel le brûleur à gaz (10) est juxtaposé par rapport à un dispositif d'acheminement (40) pour acheminer des produits alimentaires (53), le brûleur à gaz (10) étant capable de marquer au fer rouge des produits alimentaires (53) passant par lui sur le dispositif d'acheminement (40).

22. Appareil selon la revendication 2, dans lequel le brûleur à gaz (10) recouvre le dispositif d'acheminement (40) de sorte que la flamme générée par le brûleur (10) s'étend en descendant vers le dispositif d'acheminement (40).

23. Appareil de traitement de la nourriture selon l'une quelconque des revendications précédentes, dans lequel le brûleur à gaz (10) est combiné à un extracteur (45) disposé pour extraire des gaz générés par le fonctionnement du brûleur (10).

24. Appareil selon la revendication 23, dans lequel l'extracteur (45) est une calotte d'extraction (46).

25. Appareil de traitement de la nourriture selon l'une quelconque des revendications précédentes dans lequel le brûleur à gaz (10) est combiné à un extincteur de feu automatique comprenant un transducteur sensible à la chaleur ou à une flamme (49) éloigné du brûleur à gaz (10), et l'appareil comprend en outre :
un dispositif de commande pour l'extincteur ; et
une source commutable (51) d'un milieu d'extinction de la combustion, auquel cas sur le transducteur (49) détectant une valeur d'intensité prédéterminée de chaleur ou de flamme, le dispositif de commande fonctionne pour fournir le gaz d'extinction de la combustion au brûleur à gaz (10) et éteindre sa flamme.

26. Procédé de marquage d'un morceau de viande comprenant les étapes de
placement du morceau de viande de façon juxtaposée par rapport à l'orifice de sortie d'un brûleur à gaz (10) d'un appareil de traitement de la nourriture capable de générer une flamme allongée (20) d'une largeur inférieure à 10 mm à une distance allant jusqu'à 50 mm dudit orifice de sortie ; et
fonctionnement dudit brûleur (10) tout en commandant simultanément la quantité d'oxygène sur les limites latérales de la flamme (20).

27. Procédé selon la revendication 26, dans lequel la viande est placée de façon adjacente à un brûleur à gaz (10) capable de générer une pluralité de flammes allongées, généralement parallèles (20), chacune d'une largeur inférieure à 10 mm à une distance allant jusqu'à 50 mm à partir des orifices de sortie du brûleur (10).

28. Procédé selon la revendication 26 ou la revendication 27, dans lequel la ou chaque flamme (20) a des bords sensiblement parallèles.

29. Procédé selon l'une quelconque des revendications 26 à 28, dans lequel l'étape de commande de la quantité d'oxygène comprend l'application d'un gaz viciant la combustion pour séparer de la flamme (20) générée par le brûleur à gaz (10).

30. Procédé selon l'une des revendications 26 à 29, dans lequel le gaz viciant la combustion est du nitrogène.

31. Procédé selon l'une quelconque des revendications 26 à 30, dans lequel l'appareil de traitement de la nourriture correspond à l'une quelconque des revendications 1 à 20.

32. Procédé de marquage d'un morceau de viande selon la revendication 26, comprenant les étapes d'application d'un gaz viciant la combustion sur chaque côté de la flamme (20) pour définir ainsi un creux à côtés généralement parallèles qui soutient la combustion flanquée sur chaque côté par une zone de gaz viciant la combustion.

33. Appareil de traitement de la nourriture selon l'une quelconque des revendications 1 à 7, ou l'une quelconque des revendications 13, 15, 16, 17, 18, 19 et 20 si dépendantes de l'une quelconque des revendications 1 à 7, dans lequel au moins les premiers et deuxièmes orifices sont formées dans une série de têtes de brûleur (40) définissant un réseau de têtes de brûleur (40), chaque tête de brûleur (40) étant supportée sur et en communication fluide avec au moins une dérivation d'un collecteur d'alimentation en gaz (41) pour amener le gaz combustible et le gaz viciant la combustion respectivement aux premiers et deuxièmes orifices.

34. Appareil de traitement de la nourriture selon la revendication 33, dans lequel chaque dérivation du collecteur (41) comprend des conduits distincts (42 ; 43) respectivement pour fournir du gaz combustible à un ou plusieurs desdits premiers orifices et du gaz viciant la combustion à un ou plusieurs desdits deuxièmes orifices.

35. Appareil de traitement de la nourriture selon la revendication 33 ou la revendication 34, dans lequel les têtes de brûleur (40) sont supportées en rangées sur le collecteur (41).

36. Appareil de traitement de la nourriture selon la revendication 35, dans lequel les têtes de brûleur (40) de chaque rangée sont décalées, dans le sens longitudinal de la rangée, à partir des têtes de brûleur (40) d'une dite rangée adjacente.
